# EUROPEAN PATENT SPECIFICATION

(11) **EP 4 369 467 B1**
(45) Date of publication and mention of the grant of the patent: **11.11.2026**
(21) Application number: 23843444.3
(22) Date of filing: 21.07.2023
(51) Int. Cl.: H01M 10/0587, H01M 10/42, H01M 10/052, H01M 50/107, H01M 10/04

(54) **JELLY-ROLL TYPE ELECTRODE ASSEMBLY AND SECONDARY BATTERY COMPRISING SAME**
JELLY-ROLL-ELEKTRODENANORDNUNG UND SEKUNDÄRBATTERIE DAMIT
ENSEMBLE ÉLECTRODE DE TYPE ROULÉ ET BATTERIE SECONDAIRE LE COMPRENANT

(30) Priority: 21.07.2022 KR 20220090108
(43) Date of publication of application: 15.05.2024
(73) Proprietor: LG Energy Solution, Ltd., Seoul 07335 (KR)
(72) Inventor: JEONG, Seyoung, Daejeon 34122 (KR); JU, Jeonghun, Daejeon 34122 (KR)
(74) Representative: Goddar, Heinz J.
(86) International application number: PCT/KR2023/010624
(87) International publication number: WO 2024/019598

(56) References cited:
- JP-A- 2017 183 193
- JP-A- H0 676 857
- KR-A- 20210 023 527
- KR-A- 20210 140 997
- KR-A- 20210 155 707
- US-A1- 2011 020 679
- US-A1- 2013 004 814

## Description

### [Technical Field]

The present invention relates to a jelly-roll type electrode assembly and a secondary battery including the same, and more particularly, to a jelly-roll type electrode assembly having an outer circumference tap structure and a cylindrical secondary battery including the same. The present application claims priority to and the benefit of Korean Patent Application No. 10-2022-0090108 filed in the Korean Intellectual Property Office on July 21, 2022.

### [Background Art]

For a cylindrical battery, a jelly-roll type electrode assembly is manufactured by rolling a long electrode having a prescribed width into a roll form. A cylindrical battery manufactured by inserting such a jelly-roll type electrode assembly into a battery case is subjected to repeating contraction/expansion of the electrode during charging and discharging, and stress may be caused due to a step formed within the structure of the jelly-roll.

In particular, when a jelly-roll type electrode assembly having a negative electrode as the outermost structure, the outermost negative electrode covers an end of a positive electrode, and a space next to the free edge of the positive electrode exists due to a thickness of the positive electrode. In this case, a step formed in such a space due to the thickness of the positive electrode forms stress in the negative electrode, and the stress may be concentrated on a surface opposite to a surface of the negative electrode facing the positive electrode during charging and discharging, thereby causing an outer crack in the negative electrode.

In order to prevent the crack on the outer side of the negative electrode, it is necessary to reduce the stress concentration of the negative electrode in the corresponding region.

Relevant state of the art is described in documents US 2011/020679 A1 and KR 2021 0023527 A.

### [Detailed Description of the Invention]

### [Technical Problem]

The present invention has been made in an effort to provide a jelly-roll type electrode assembly with an improved design, and a secondary battery including the same.

The problems solved by the present invention are not limited to the above-mentioned problem, and other problems not mentioned will be apparently understood by one skilled in the art from the following description.

### [Technical Solution]

An exemplary embodiment of the present invention provides a jelly-roll type electrode assembly in which a first electrode, a first separator, a second electrode and a second separator are sequentially stacked and wound, wherein the first electrode, the first separator, the second electrode and the second separator each include a first end portion at which winding begins along a longitudinal direction, and a second end portion at which the winding ends, and wherein the second end portion of the first separator or the second separator extends longer than the second end portion of the second electrode, and includes a step reducing portion bent or rolled toward the second end portion of the second electrode.

Another exemplary embodiment of the present invention provides a secondary battery including the jelly-roll type electrode assembly described above; and a battery case for accommodating the electrode assembly.

### [Advantageous Effects]

The jelly-roll type electrode assembly and the secondary battery including the same according to an exemplary embodiment of the present invention can prevent cracks and deformation of the electrode assembly by reducing the step formed within the assembly due to the thickness of the positive electrode, thereby improving stress concentration concentrated on the outermost negative electrode.

In addition, the jelly-roll type electrode assembly and the secondary battery including the same according to an exemplary embodiment of the present invention are economical because the step reducing portion can prevent occurrence of local problems such as lithium precipitation in the corresponding region.

The effects of the present invention are not limited to the foregoing effects, and effects not mentioned will be apparently understood by one skilled in the art from the present specification and accompanying drawings.

### [Brief Description of Drawings]

FIG. 1 is a side cross-sectional view of a jelly-roll type electrode assembly including a step reducing portion having a rolled first separator according to an exemplary embodiment of the present invention.
FIG. 2 is a side cross-sectional view of a jelly-roll type electrode assembly including a step reducing portion having a rolled second separator according to an exemplary embodiment of the present invention.
FIG. 3 is top view of a partially rolled jelly-roll type electrode assembly implemented according to an exemplary embodiment of the present invention.
FIG. 4 is a side cross-sectional view of a step portion of a jelly-roll type electrode assembly according to an exemplary embodiment of the present invention.
FIG. 5 is a side cross-sectional view of a stack structure of a jelly-roll type electrode assembly according to an exemplary embodiment of the present invention.
FIG. 6 is a scanning electron microscope image of a result of crack improvement evaluation for a secondary battery according to Example 1.
FIG. 7 is a scanning electron microscope image of a result of crack improvement evaluation for a secondary battery according to Example 2.
FIG. 8 is a scanning electron microscope image of a result of crack improvement evaluation for a secondary battery according to Comparative Example 1.
FIG. 9 is a side view of a simulation image showing a result of crack improvement evaluation for the secondary battery according to Example 1.
FIG. 10 is a side view of a simulation image showing a result of crack improvement evaluation for the secondary battery according to Example 2.
FIG. 11 is a side view of a simulation image showing a result of crack improvement evaluation for the secondary battery according to Comparative Example 1.

### <Explanation of Reference Numerals and Symbols>

1000: jelly-roll type electrode assembly
100, 100': first electrode
101: first electrode current collector
102, 103: first electrode active material layer
120: second end portion of first electrode
20: first separator
21: first end portion of first separator
22: second end portion of first separator
300: second electrode
301: second electrode current collector
302, 303: second electrode active material layer
320: second end portion of second electrode
40: second separator
41: first end portion of second separator
42: second end portion of second separator
50: step reducing portion
60: step portion
70: disconnection prevention tape
H1: first step
H2: second step
T1, T1': thickness of step reducing portion
T2: thickness of second end portion of second electrode
L1: length, in winding axis direction, of step reducing portion
L2: length, in longitudinal direction, of step reducing portion

### [Best Mode]

When one part "includes", "comprises" or "has" one constituent element throughout the present specification, unless otherwise specifically described, this does not mean that another constituent element is excluded, but means that another constituent element may be further included.

Throughout the present specification, when a member is referred to as being "on" another member, the member can be in direct contact with another member or an intervening member may also be present.

Hereinafter, the present invention will be described in detail with reference to the drawings. However, it should be noted that the drawings are provided for illustrating the present invention, and the scope of the present invention is not limited by the drawings.

An exemplary embodiment of the present invention provides a jelly-roll type electrode assembly in which a first electrode, a first separator, a second electrode and a second separator are sequentially stacked and wound, wherein the first electrode, the first separator, the second electrode and the second separator each include a first end portion at which winding begins along a longitudinal direction, and a second end portion at which the winding ends, and wherein the second end portion of the first separator or the second separator extends past the second end portion of the second electrode, and includes a step reducing portion bent or rolled toward the second end portion of the second electrode. In the jelly-roll type electrode assembly according to the present invention, a step is formed by a thickness of the step reducing portion, so that it is possible to reduce a step formed by a thickness of the second end portion of the second electrode, and to prevent cracks and deformation on an outer side of the electrode assembly by improving stress concentration on a surface of the first electrode opposite to a surface facing the second end portion of the second electrode.

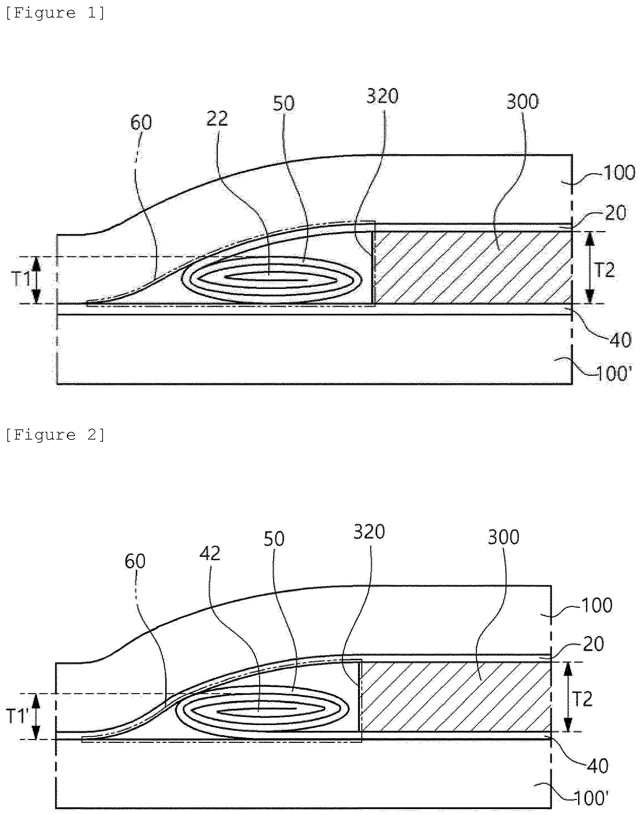

FIG. 1 shows a jelly-roll type electrode assembly including a step reducing portion formed by rolling a first separator according to an exemplary embodiment of the present invention, and FIG. 2 shows a jelly-roll type electrode assembly including a step reducing portion formed by rolling of a second separator according to an exemplary embodiment of the present invention.

Referring to FIG. 1, in a jelly-roll type electrode assembly according to an exemplary embodiment of the present invention, a first electrode 100, a first separator 20, a second electrode 300 and a second separator 40 each include respective first end portions at which winding begins along a longitudinal direction, and respective second end portions at which the winding ends, and the second end portion 22 of the first separator 20 is longer and extends past a second end portion 320 of the second electrode 300, and includes a step reducing portion 50 bent or rolled toward the second end portion 320 of the second electrode 300.

Referring to FIG. 2, in a jelly-roll type electrode assembly according to an exemplary embodiment of the present invention, a first electrode 100, a first separator 20, a second electrode 300 and a second separator 40 each include respective first end portions at which winding begins along a longitudinal direction, and respective second end portions at which the winding ends, and the second end portion 42 of the second separator 40 is longer than and extends past a second end portion 320 of the second electrode 300, and includes a step reducing portion 50 bent or rolled toward the second end portion 320 of the second electrode 300.

The bending of the step reducing portion 50 may form a sheet shape having a plurality of folds by bending the first separator or the second separator two or more times at regular intervals so that the second end portion of the first separator or the second separator is positioned at a central portion of the step reducing portion. The rolling may form a scroll shape having an elliptical cross section by winding the first separator or the second separator two or more times at regular intervals so that the second end portion is positioned at the central portion of the step reducing portion. The bending or rolling form may vary depending on flexibility of the material of the first separator or the second separator.

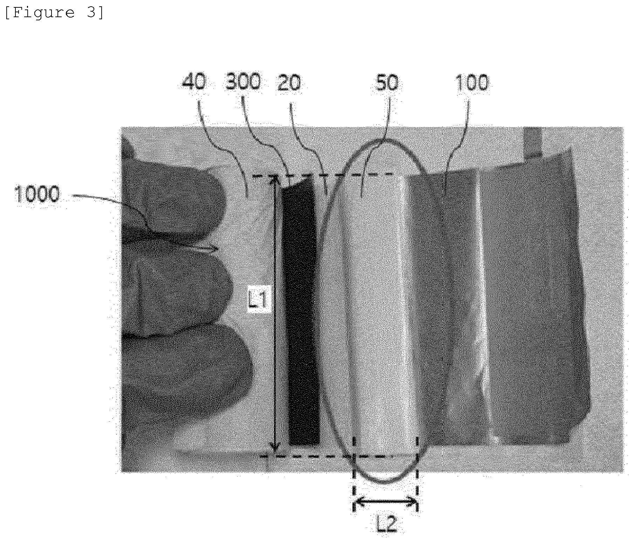

FIG. 3 is an image of a jelly-roll type electrode assembly implemented according to an exemplary embodiment of the present invention.

Referring to FIG. 3, in a jelly-roll type electrode assembly 1000 according to an embodiment of the present invention, the second end portion of the first separator 20 extends longer than the second end portion of the second electrode 300, and may be rolled toward the second end portion of the second electrode to form the step reducing portion 50, or to form a scroll shape having a predetermined thickness and an elliptical cross section.

According to an exemplary embodiment of the present invention, a length L1, in a winding axis direction, of the step reducing portion may be 50% or more and 100% or less based on 100% of a length, in the winding axis direction, of the first electrode. Specifically, the length, in the winding axis direction, of the step reducing portion may be 55% or more, 60% or more, or 65% or more based on 100% of the length, in the winding axis direction, of the first electrode, and the length, in the winding axis direction, of the step reducing portion may be 95% or less, 90% or less, or 85% or less based on 100% of the length, in the winding axis direction, of the first electrode. When the length, in the winding axis direction, of the step reducing portion satisfies the above-described ranges, stress concentrated on a surface of the first electrode opposite to a surface facing the second end portion of the second electrode can be effectively dispersed due to a step formed by the second end portion of the second electrode, thereby preventing cracks forming due to the stress. Additionally, such a design ensures stability of the battery.

According to an exemplary embodiment of the present invention, the step reducing portion may be formed by bending or rolling the second end portion of the first separator or the second separator toward the second end portion of the second electrode 3 or more times and 16 times or less. Specifically, the step reducing portion may be formed by bending or rolling the second end portion of the first separator or the second separator toward the second end portion of the second electrode 4 or more times, 6 or more times, or 8 or more times. The step reducing portion may be formed by bending or rolling the second end portion of the first separator or the second separator toward the second end portion of the second electrode 14 times or less, 12 times or less, or 10 times or less. For example, when the step due to the thickness of the second electrode is 170 µm, the first separator or the second separator having a thickness of 13 µm may be bent or rolled 4 times or more and 10 times or less to form a step reducing portion having a thickness within a range of 55 µm or greater and 130 µm or less, and when the step due to the thickness of the second electrode is 130 µm, the first separator or the second separator having a thickness of 12.5 µm may be bent or rolled 4 times or more and 10 times or less to form a step reducing portion having a thickness within a range of 50 µm or greater and 100 µm or less. Thereby, it is possible to control the thickness range at a certain ratio. When the separators are bent and/or rolled a number of times according to the above-described ranges, the thickness of the step reducing portion satisfies a certain ratio with respect to the thickness of the second end portion of the second electrode, so that it is possible to reduce the step effect and to prevent the formation of an additional step. Further, such a structure is cost-effective by avoiding excessive bending or rolling.

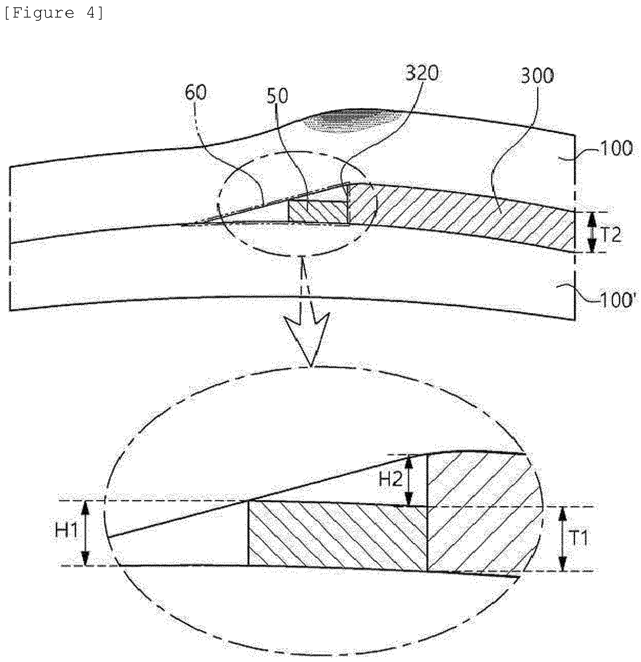

FIG. 4 schematically shows a step portion of a jelly-roll type electrode assembly according to an exemplary embodiment of the present invention.

Referring to FIG. 4, in the jelly-roll type electrode assembly according to an exemplary embodiment of the present invention, the first electrode 100 includes a step portion 60 defined by an empty space formed in a region where the second end portion 320 of the second electrode 300 is covered, and the step reducing portion 50 may be provided in the step portion 60. Specifically, in the electrode assembly according to an exemplary embodiment of the present invention, the first electrode 100 positioned on the outermost side is longer than and extends past the second end portion 320 of the second electrode 300 and may be additionally wound on the outer side of the electrode assembly, and a step may be formed next to the second end portion 320 of the second electrode 300 due to the thickness of the second electrode. That is, the jelly-roll type electrode assembly according to an exemplary embodiment of the present invention may form a stack structure of the first electrode/the first separator/the second electrode/the second separator/the first electrode in a wound state, but the length of the second electrode may be shorter than that of the other layers, and there may be a region forming a stack structure of the first electrode/the first separator/the empty space/the second separator/the first electrode on the outermost side. In other words, the step portion 60, which is an empty space surrounded by the first electrode 100 or the first separator (not shown) in contact with the inner circumferential surface of the first electrode/the second end portion 320 of the second electrode 300/the first electrode 100' or the second separator (not shown), may be formed. Specifically, the step reducing portion 50 may be provided in the step portion 60, and may be provided on an opposite surface of the first electrode 100', which is positioned inside the electrode assembly, to a surface facing the winding axis. In addition, the step reducing portion may form a region in additional contact with the inner circumferential surface of the first electrode 100 positioned on the outermost side, thereby dispersing the stress concentrated in a region where the second end portion 320 of the second electrode 300 is in contact with the inner circumferential surface of the first electrode 100.

According to an exemplary embodiment of the present invention, the step reducing portion may be provided in direct contact with or spaced apart from the second end portion of the second electrode. Specifically, when the step reducing portion is spaced apart from the second end portion of the second electrode, a spacing distance between the step reducing portion and the second end portion of the second electrode may be 1 mm or greater and 2 mm or less. More specifically, the spacing distance between the step reducing portion and the second end portion of the second electrode may be 1 mm or greater and 1.5 mm or less, or 1.5 mm or greater and 2 mm or less. When the spacing distance satisfies the range described above, the process of bending or rolling the first separator or the second separator to form the step reducing portion may be easily performed. Such a design has an appropriate thickness of the separators and electrodes in order to effectively disperse the stress concentrated in the region where the second end portions of the first electrode and the second electrode are in contact, and to prevent unnecessary loss of materials to thus ensure economic efficiency.

According to an exemplary embodiment of the present invention, the step portion may include a first step formed by a thickness of the step reducing portion, and a second step formed by a difference between a thickness of the second electrode and the thickness of the step reducing portion.

Referring to FIG. 4, the first step H1 may have the same dimensions as the thickness T1 of the step reducing portion, and the second step H2 may have the same dimensions as a difference between the thickness T2 of the second electrode and the thickness T1 of the step reducing portion. Specifically, the first step H1 may have the same dimensions as the thickness T1 of the step reducing portion measured at a position where the step reducing portion and the inner circumferential surface of the first electrode are in contact with each other, and the second step H2 may have the same dimensions as the difference between the thickness T2 of the second electrode measured at a position where the second end portion of the second electrode and the inner circumferential surface of the first electrode are in contact each other and the thickness T1 of the step reducing portion measured at the position where the step reducing portion and the inner circumferential surface of the first electrode contact each other.

More specifically, referring to FIG. 1, the step reducing portion may be formed by bending or rolling the first separator 20, and the first step H1 may refer to the thickness T1 of the step reducing portion, which is a straight line distance between the first electrode 100 and the second separator 40 measured in a direction perpendicular to the winding axis at a position where the step reducing portion 50 and the inner circumferential surface of the first electrode 100 are in contact with each other. On the other hand, referring to FIG. 2, the step reducing portion 50 may be formed by bending or rolling the second separator 40, and the first step H1 may refer to a thickness T1' of the step reducing portion, which is a straight line distance between the first separator and the first electrode measured in a direction perpendicular to the winding axis at a position where the step reducing portion and the first separator contact the inner circumferential surface of the first electrode. However, since the contacting portions described above may be positioned at different circumferential positions around the electrode assembly due to the flexibility of the materials forming the step reducing portion and the first electrode, and the difference in bending or rolling shape, the thickness T1 or T1' of the step reducing portion may be approximated as a value obtained by subtracting a thickness of one layer of the first separator or the second separator from the thickness of the central portion of the step reducing portion.

According to an exemplary embodiment of the present invention, the first step may be 20% or greater and 95% or less of a thickness of the second end portion of the second electrode. Specifically, referring to FIG. 4, the first step H1 may be 25% or greater, 30% or greater, 35% or greater, or 40% or greater of the thickness T2 of the second end portion of the second electrode, and the first step H1 may be 90% or less, 85% or less, 80% or less, or 75% or less of the thickness T2 of the second end portion of the second electrode. When the numerical range described above is satisfied, a stepwise two-stage step can be formed, stress concentrated on a surface of the first electrode opposite to a surface facing the second step can be effectively dispersed due to the first step and the second step, and problems such as cracks caused due to the stress can be effectively reduced to ensure stability of the battery.

According to an exemplary embodiment of the present invention, a volume of the step reducing portion may be 5% or greater and 95% or less of a volume of the step portion. Specifically, the volume of the step reducing portion may be 10% or greater, 15% or greater, 20% or greater, 25% or greater, or 30% or greater of the volume of the step portion, and the volume of the step reducing portion may be 90% or less, 85% or less, 80% or less, or 75% or less of the volume of the step portion. Referring to FIGS. 3 and 4, when the second end portion of the first separator or the second separator is bent or rolled toward the second end portion of the second electrode, the step reducing portion has a shape approximate to a rectangular parallelepiped, so the volume of the step reducing portion may be approximately calculated by a rectangular parallelepiped volume formula. Specifically, the volume of the step reducing portion may be approximately calculated using the length L1, in the winding axis direction, of the step reducing portion, a length L2, in the longitudinal direction, of step reducing portion, and the thickness T1 of the step reducing portion. In addition, since the volume of the step portion may vary depending on several factors including the tension of a manufacturing apparatus, a charge/discharge state, an outer diameter of the jelly-roll, and the like during a manufacturing process of the cell, the volume of the step portion may be approximately calculated through a trigonometric function. Specifically, the volume of the step portion may be approximately calculated by drawing a virtual triangle having the thickness T2 of the second end portion of the second electrode as a height and the length of the first electrode or the second separator surrounding the step portion as a base. In some cases, the volume of the step portion may be confirmed through a computed tomography (CT) technique. When the volume of the step reducing portion satisfies the range described above, the stress concentrated on the surface of the first electrode opposite to the surface facing the second step can be effectively dispersed due to the first step. In addition, even when the electrode assembly is immersed with the electrolyte solution, since the volume of the step reducing portion does not exceed the volume of the step portion, damage to the electrode assembly, which may be additionally caused when the volume of the electrode assembly changes due to the charging/discharging cycle of the secondary battery, can be prevented.

According to an exemplary embodiment of the present invention, the thickness of the step reducing portion may be 20 µm or greater and 150 µm or less. Specifically, the thickness of the step reducing portion may be 30 µm or greater, 40 µm or greater, 50 µm or greater, or 60 µm or greater, and the thickness of the step reducing portion may be 140 µm or less, 130 µm or less, 120 µm or less, 110 µm or less, or 100 µm or less. The thickness of the step reducing portion may have the largest value at the central portion of the step reducing portion where the second end portion of the first separator or the second separator is positioned, and may have the smallest value at the end portion of the step reducing portion where the first separator or the second separator is bent or rolled. When the thickness of the step reducing portion satisfies the ranges described above, the step due to the thickness of the second electrode can be effectively reduced, and thus, the stress concentrated due to the step can be effectively dispersed. For example, when the step due to the thickness of the second electrode is 170 µm, a step reducing portion having a thickness range of 55 µm or greater and 130 µm or less may be formed, and when the step due to the thickness of the second electrode is 130 µm, a step reducing portion having a thickness range of 50 µm or greater and 100 µm or less may be formed. As a result, the thickness range of the step reducing portion may be controlled to reduce the step due to the thickness of the second electrode by providing the first step and the second step of a certain ratio.

Referring to FIG. 3, the length L2, in the longitudinal direction, of the step reducing portion included in the jelly-roll type electrode assembly according to an exemplary embodiment of the present invention may be 8 mm or longer and 30 mm or less. Specifically, the length L2, in the longitudinal direction, of the step reducing portion may be 10 mm or longer, 12 mm or longer, 14 mm or longer, or 16 mm or longer, and the length L2, in the longitudinal direction, of the step reducing portion may be 28 mm or less, 26 mm or less, 24 mm or less, 22 mm or less, or 20 mm or less. The length, in the longitudinal direction, of the step reducing portion may refer to a length measured from one end portion to the other end portion of the step reducing portion where the first separator or the second separator is bent or rolled. When the length of the step reducing portion satisfies the ranges described above, the step due to the thickness of the second electrode can be effectively reduced, and the first electrode positioned on the outermost side of the wound jelly-roll type electrode assembly and surrounding the step portion has an appropriate inclination and curvature, so that damage to a region in contact with the second end portion of the second electrode or damage due to pressure acting on an opposite surface of the empty space can be minimized.

According to an exemplary embodiment of the present invention, the second end portion of the first electrode may extend longer than the second end portion of the second electrode and may be additionally wound on the outer side of the electrode assembly. In addition, according to an exemplary embodiment of the present invention, the first electrode may be a negative electrode, and the second electrode may be a positive electrode. Specifically, the first electrode, which is the outermost layer of the electrode assembly, may be a negative electrode, and the electrode assembly may have a negative electrode-outermost structure where a negative electrode/a separator/a positive electrode/a separator are wound. In other words, the jelly-roll type electrode assembly may have an outer circumferential tab structure where the negative electrode is exposed on the outermost side.

According to an exemplary embodiment of the present invention, the negative electrode may include a negative electrode current collector and a negative electrode active material layer provided on the negative electrode current collector. Specifically, the negative electrode may include a negative electrode current collector and a negative electrode active material layer formed on one surface or both surfaces of the negative electrode current collector and including a negative electrode active material. In other words, the negative electrode active material layer is formed on a negative electrode coated portion of the negative electrode current collector, and a surface not provided with the negative electrode active material layer may be referred to as a negative electrode uncoated portion.

According to an exemplary embodiment of the present invention, the negative electrode current collector may include a negative electrode coated portion formed with a negative electrode active material layer and a negative electrode uncoated portion not formed with the negative electrode active material layer, and may include a tab on the negative electrode uncoated portion. Specifically, the negative electrode current collector may include a negative electrode uncoated portion, and a negative electrode tab formed on the negative electrode uncoated portion. Accordingly, the manufactured electrode assembly may include one or more negative electrode tabs.

According to an exemplary embodiment of the present invention, the negative electrode active material layer may include a negative electrode active material including one or more selected from the group consisting of a silicon-based material and a carbon-based material. Specifically, the negative electrode active material layer may include a silicon-based material in an amount more than 0% and 20% or less. In addition, the negative electrode active material layer may further include a negative electrode conductive material and a negative electrode binder, and for the negative electrode active material, the negative electrode conductive material, and the negative electrode binder, any materials that are known in the art may be used without limitation.

According to an exemplary embodiment of the present invention, the negative electrode current collector may be formed from a variety of materials that allow for conductivity without causing a chemical change in the battery. For example, for the negative electrode current collector, copper, stainless steel, aluminum, nickel, titanium, fired carbon, aluminum or stainless steel each surface treated with carbon, nickel, titanium, silver, or the like may be used. Specifically, transition metals that adsorb carbon well, such as copper and nickel, may be used for the negative electrode current collector.

A thickness of the negative electrode current collector may be 70 µm or more and 180 µm or less. However, the thickness of the negative electrode current collector is not limited thereto.

According to an exemplary embodiment of the present invention, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

According to an exemplary embodiment of the present invention, the negative electrode conductive material may be formed from a variety of materials that allow for conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; metal powders such as fluorocarbon, aluminum, and nickel powder; a conductive whisker such as zinc oxide and potassium titanate; a conductive metal oxide such as titanium oxide; a conductive material such as polyphenylene derivative, and the like may be used.

According to an exemplary embodiment of the present invention, the positive electrode may include a positive electrode current collector and a positive electrode active material layer provided on the positive electrode current collector. Specifically, the positive electrode may include a positive electrode current collector and a positive electrode active material layer formed on one surface or both surfaces of the positive electrode current collector and including a positive electrode active material. In other words, the positive electrode active material layer is formed on a positive electrode coated portion of the positive electrode current collector, and a surface not provided with the positive electrode active material layer may be referred to as a positive electrode uncoated portion.

According to an exemplary embodiment of the present invention, the positive electrode current collector may include a positive electrode coated portion formed with a positive electrode active material layer and a positive electrode uncoated portion not formed with the positive electrode active material layer, and may include a tab on the positive electrode uncoated portion. Specifically, the positive electrode current collector may include a positive electrode uncoated portion, and a positive electrode tab formed on the positive electrode uncoated portion. Accordingly, the manufactured electrode assembly may include one or more positive electrode tabs.

According to an exemplary embodiment of the present invention, the positive electrode current collector is not particularly limited as long as it has conductivity without inducing a chemical change in the battery. Specifically, for the positive electrode current collector, stainless steel, aluminum, nickel, titanium, fired carbon, aluminum or stainless steel each surface treated with carbon, nickel, titanium, silver, or the like, or the like may be used.

In addition, the positive electrode current collector may typically have a thickness of 80 µm or greater and 190 µm or less, and a surface of the current collector may be formed with microscopic irregularities to enhance an adhesive force of the positive electrode active material. For example, the positive electrode current collector may be used in various forms such as a film, a sheet, a foil, a net, a porous body, a foamed body, and a non-woven fabric body.

According to an exemplary embodiment of the present invention, the positive electrode active material may be a positive electrode active material that is typically used. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide having a chemical formula Li₁₊ₓMn₂₋ₓO₄ (0≤x≤0.33), LiMnO₃, LiMn₂O₃ and LiMnO₂; a lithium copper oxide (Li₂CuO₂); a vanadium oxide such as LiV₃O₈, V₂O₅ and Cu₂V₂O₇; Ni-site type lithium nickel oxide represented by chemical formula LiNi_{1-y}M_{y}O₂ (where M is at least one selected from the group consisting of Co, Mn, Al, Cu, Fe, Mg, B, and Ga, and satisfies 0.01≤y≤0.3); a lithium manganese composite oxide represented by chemical formula LiMn_{2-z}M_{z}0₂ (where M is at least one selected from the group consisting of Co, Ni, Fe, Cr, Zn and Ta, and satisfies 0.01≤z≤0.1) or Li₂Mn₃MO₈ (where M is at least one selected from the group consisting of Fe, Co, Ni, Cu and Zn.); LiMn₂O₄ in which a part of Li of the chemical formula is substituted with an alkaline earth metal ion, or the like, but is not limited thereto. The positive electrode may be Li metal.

According to an exemplary embodiment of the present invention, the positive electrode active material layer may further include a positive electrode conductive material and a positive electrode binder. The positive electrode conductive material is used to impart conductivity to the electrode, and can be used without particular limitation as long as it does not cause a chemical change and has electronic conductivity in a battery to be configured. Specific examples of the positive electrode conductive material may include graphite such as natural graphite or artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, and the like, and any one thereof or a mixture of two or more thereof may be used.

In addition, the positive electrode binder serves to improve attachment between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

According to an exemplary embodiment of the present invention, the second end portion of the second electrode may have a free edge shape. Here, the free edge shape may refer to a shape in which an end portion of the second electrode active material layer of the electrode coincides with an end portion of the electrode current collector. That is, the jelly-roll type electrode assembly according to an exemplary embodiment of the present invention may have a structure where the first electrode, which is the outermost layer, covers the second end portion of the second electrode having a free edge shape, may include a step portion, which is an empty space formed in a region where the first electrode covers the second end portion of the second electrode, and may include, in the step portion, a step reducing portion provided in direct contact with or spaced apart from one side of the second end portion of the second electrode in the form of a free edge.

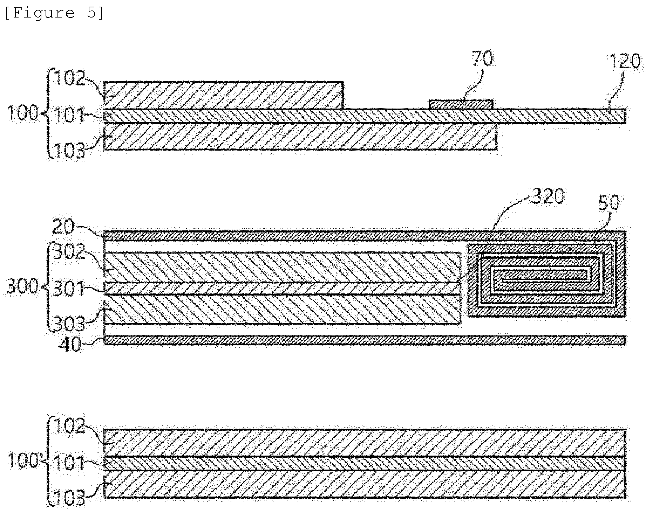

FIG. 5 schematically shows a stack structure of a jelly-roll type electrode assembly according to an exemplary embodiment of the present invention.

Referring to FIG. 5, in the first electrodes 100 and 100', the first electrode 100 is present on the outermost side of the electrode assembly 1000, and the first electrode 100 may include first electrode active material layers 102 and 103 provided on both surfaces of a first electrode current collector 101, and may include an uncoated portion (non-coating area). On the other hand, the second electrode 300 may be present on the outermost side of the electrode assembly 1000, and the second electrode 300 may include positive electrode active material layers 302 and 303 provided on both surfaces of the second electrode current collector 301, but may not include an uncoated portion (non-coating area). In other words, the electrode assembly may have a free edge form where the ends of the second electrode current collector and the second electrode active material layer coincide with each other. That is, the second end portion 320 of the second electrode 300 may include the end portions of the second electrode active material layers 302 and 303 and the end portion of the second electrode current collector 301 having the same length in the longitudinal direction. The second end portion 320 of the second electrode 300 may be such that the end portions of the second electrode active material layers 302 and 303 and the end portion of the second electrode current collector 301 coincide with each other. On the other hand, according to an exemplary embodiment of the present invention, the uncoated portion present on a surface of the first electrode 100 opposite to a surface facing the second end portion 320 of the second electrode 300 may further include a disconnection prevention tape 70 attached to reduce a possibility of a short or generation of a crack due to stress concentration in the corresponding region.

According to an exemplary embodiment of the present invention, the jelly-roll type electrode assembly may further include a plurality of separators. For example, the jelly-roll type electrode assembly may have a structure where a first electrode/a first separator/a second electrode/a second separator are sequentially stacked. The separator serves to separate the first electrode and the second electrode and to provide a movement path of lithium ions. Any separator known in the art may be used without particular limitation as long as it is typically used as a separator in a secondary battery, and particularly, a separator having high moisture-retention ability for an electrolyte as well as a low resistance to the movement of electrolyte ions. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of high melting point glass fibers, polyethylene terephthalate fibers, or the like may be used. In addition, the separator may typically have a thickness of 10 µm or greater and 20 µm or less. A separator coated with a material including a ceramic component or a polymer material so as to secure heat resistance or mechanical strength may be used. A separator having a single layer or multilayer structure may be selectively used.

An exemplary embodiment of the present invention provides a secondary battery including the jelly-roll type electrode assembly, and a battery case for accommodating the electrode assembly, and the description for the jelly-roll type electrode assembly is the same as described above.

According to an exemplary embodiment of the present invention, the secondary battery may include a cap assembly coupled to an opening portion of the battery case, and the cap assembly may include a top cap, a safety vent, and a current cutoff element.

According to an exemplary embodiment of the present invention, the first electrode may be in direct contact with an inner surface of the battery case so that the battery case serves as a first electrode terminal.

According to an exemplary embodiment of the present invention, the battery case may include an electrolyte therein. Specifically, the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but is not limited thereto. Specifically, the electrolyte may include a non-aqueous organic solvent and a metal salt.

According to an exemplary embodiment of the present invention, as the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyllolactone, 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

According to an exemplary embodiment of the present invention, a lithium salt may be used as the metal salt, and the lithium salt is a material that is readily soluble in the non-aqueous electrolyte solution, in which, for example, one or more species selected from the group consisting of F⁻, Cl⁻, I⁻, NO₃⁻, N(CN)²⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

According to an exemplary embodiment of the present invention, one or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving the lifetime characteristic of the battery, suppressing a decrease in battery capacity, improving discharge capacity of the battery, and the like, in addition to the above-described electrolyte components.

According to an exemplary embodiment of the present invention, the battery case may have a cylindrical shape. That is, since the jelly-roll type electrode assembly according to the present invention may be accommodated in the cylindrical battery case, the battery case configured to house an assembly including a positive electrode, a negative electrode, and a separator. A cap assembly is configured to cover the cylindrical battery case and an electrolyte is configured to be positioned within the cylindrical battery case. As such, the manufactured secondary battery itself may have a cylindrical shape.

Below, Examples will be described in detail to specifically describe the present invention. However, the Examples according to the present invention may be modified in other forms, and the scope of the present invention is not limited to the following Examples. The Examples of the present specification are provided to more completely explain the present invention to one skilled in the art.

### Examples

### Example 1

### Preparation of Electrode Assembly

A positive electrode as a second electrode was prepared by preparing an Al foil as a positive electrode current collector, and applying and drying a positive electrode active material slurry on the positive electrode current collector to form a positive electrode active material layer.

Next, a negative electrode as a first electrode was prepared by preparing a pure Cu foil having a thickness of 8 µm as a negative electrode current collector, and applying and drying a negative electrode active material slurry on the negative electrode current collector to form a negative electrode active material layer.

On the other hand, as a first separator and a second separator, two separators each having a coating layer formed on one surface of a sheet-like polyethylene base layer were prepared.

Then, winding was started from respective first end portions, in the longitudinal direction, of the first separator and the second separator, and the first electrode and the second electrode were sequentially introduced to prepare a jelly-roll type electrode assembly.

On the outermost side of the jelly-roll type electrode assembly, the first separator is longer than and extends past the second end portion of the second electrode, and the second end portion of the first separator was rolled 15 times toward the second end portion of the second electrode, thereby providing a step reducing portion in a step portion defined by an empty space formed in a region where the first electrode covers the second end portion of the second electrode. As a result, a structure as shown in FIG. 1 was obtained. In this embodiment, the thickness of the second end portion of the second electrode was 130 µm, the thickness of the step reducing portion was 117 µm, the length, in the longitudinal direction, of the step reducing portion was 11 mm, and the step reducing portion was provided at a distance of 1 mm from the second end portion of the second electrode.

### Preparation of Secondary Battery

A secondary battery was prepared by inserting the jelly-roll type electrode assembly into a cylindrical battery case, injecting an electrolyte solution, and sealing the cylindrical battery case.

### Example 2

A jelly-roll type electrode assembly and a secondary battery were prepared in the same manner as in Example 1, except that the second end portion of the first separator was rolled 7 times toward the second end portion of the second electrode, the thickness of the step reducing portion was 58.5 µm and the length, in the longitudinal direction, of the step reducing portion was 10 mm.

### Comparative Example 1

A jelly-roll type electrode assembly and a secondary battery were prepared in the same manner as in Example 1, except that the step reducing portion was not provided.

### Experimental Examples

### Experimental Example 1 - Electrode Crack Improvement Evaluation (SEM)

The secondary batteries according to Example 1, Example 2 and Comparative Example 1 were prepared. Then, 50 cycles of charging and discharging were performed within a range of SOC 0% to 100% under conditions of 23°C.

After the cycles, the secondary batteries according to Examples 1 and 2, and Comparative Example 1 were disassembled, the first electrode at a position corresponding to the second end portion of the second electrode was ion milled with an Ar ion beam, and the thickness of the first electrode after the charging cycles was measured using a scanning electron microscope (SEM).

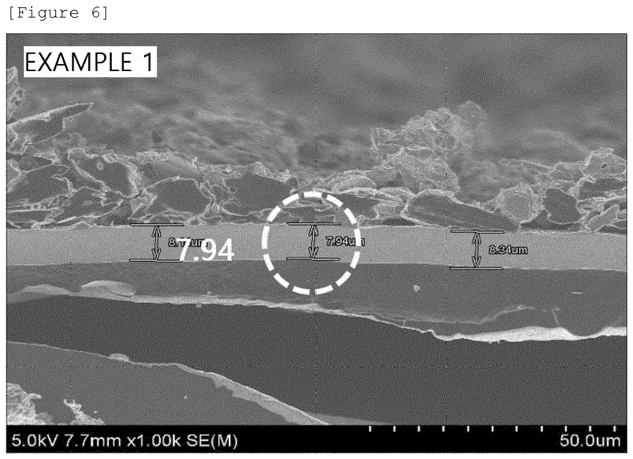

The degree of electrode crack improvement was then evaluated by comparing a thickness ratio of the step reducing portion in accordance with Equation 1 below and a deformation ratio of the first electrode in accordance with Equation 2 below. In this case, evaluation conditions and evaluation results are shown in Table 1 below and in FIGS. 6 to 8. [Equation 1] 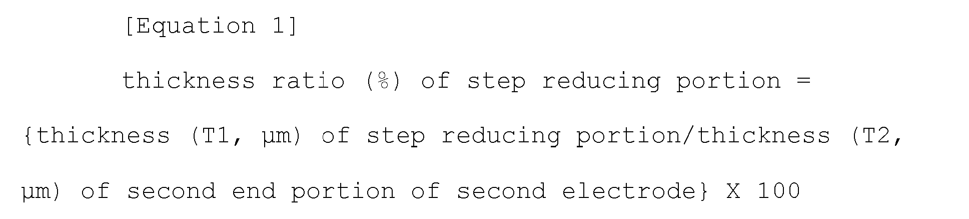 thickness ratio (%) of step reducing portion = {thickness (T1, µm) of step reducing portion/thickness (T2, µm) of second end portion of second electrode} × 100 [Equation 2] 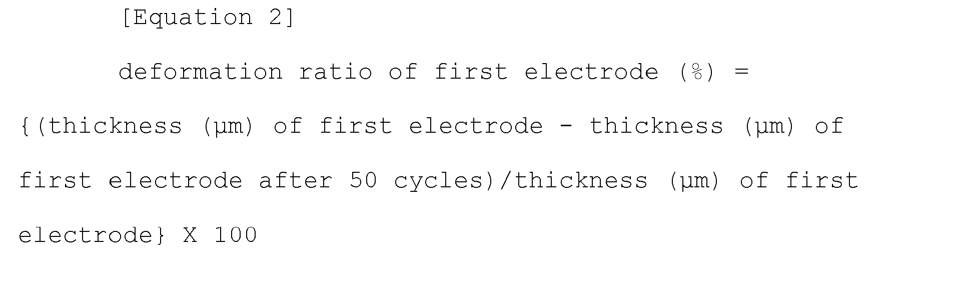 deformation ratio of first electrode (%) = {(thickness (µm) of first electrode - thickness (µm) of first electrode after 50 cycles)/thickness (µm) of first electrode} × 100

**[Table 1]**

| | Comparative Example 1 | Example 1 | Example 2 |
|---|---|---|---|
| Thickness (T2, µm) of second end portion of second electrode | 130 | 130 | 130 |
| Thickness (T1, µm) of step reducing portion | - | 117 | 58.5 |
| Thickness ratio (T1/T2, %) of step reducing portion | - | 90 | 45 |
| Thickness (µm) of first electrode | 8 | 8 | 8 |
| Thickness (µm) of first electrode after 50 cycles | 6.76 | 7.94 | 7.41 |
| deformation ratio (%) of first electrode | 15.5 | 0.75 | 7.38 |

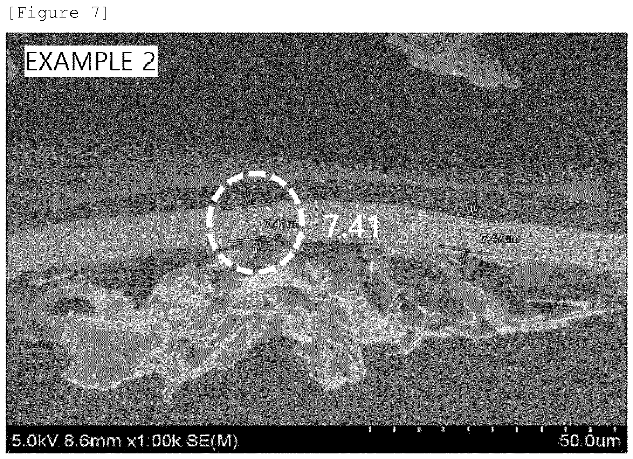

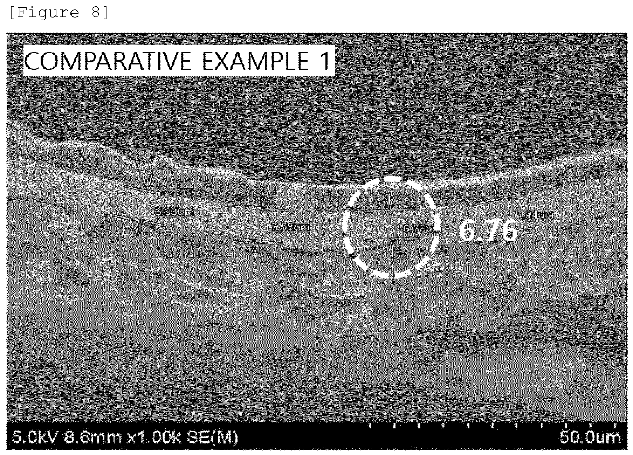

FIG. 6 is a SEM image showing a result of crack improvement evaluation for the secondary battery according to Example 1, FIG. 7 is a SEM image showing a result of crack improvement evaluation for the secondary battery according to Example 2, and FIG. 8 is a SEM image showing a result of crack improvement evaluation for the secondary battery according to Comparative Example 1. Referring to Table 1 and FIGS. 6 to 8, it was confirmed that the deformation ratio of the first electrode in the secondary batteries according to Examples 1 and 2 was reduced by 8.12% to 14.75%, as compared with the secondary battery according to Comparative Example 1. In particular, it was confirmed that the deformation ratio of the first electrode of the secondary battery according to Example 1 was the lowest, i.e., 0.75%. In such an example, the thickness ratio of the step reducing portion was 90%.

When comparing Examples 1 and 2 with Comparative Example 1, it can be seen that when contraction/expansion of the electrode is repeated during the cycles, stress is concentrated on the first electrode due to the second end portion of the second electrode, causing cracks and deformation. However, the stress concentration on the first electrode can be improved to reduce the possibility of occurrence of cracks by providing the step reducing portion in the step portion, which is defined by empty space formed next to the second end portion of the second electrode, to reduce the step due to the thickness of the second electrode.

In addition, it can be seen that when the thickness (T1, µm) of the step reducing portion and the thickness ratio (T1/T2, %) of the step reducing portion are controlled to a specific range, the possibility of occurrence of cracks in the first electrode due to the second end portion of the second electrode can be further reduced.

Thus, it can be seen that the jelly-roll type electrode assembly and the secondary battery including the same according to an exemplary embodiment of the present invention can prevent cracks and deformation of the electrode assembly by reducing the step caused by the thickness of the positive electrode, thereby improving stress concentration on the outermost negative electrode.

### Experimental Example 2 - Electrode Crack Improvement Evaluation (Simulation)

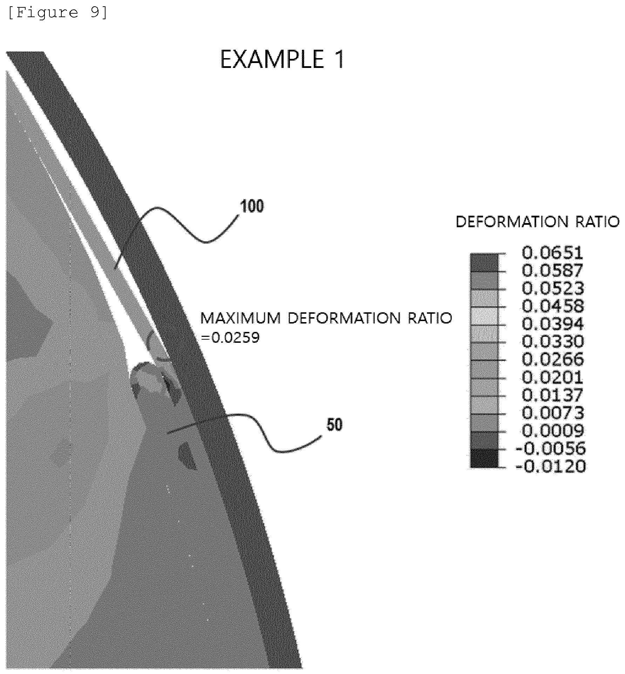

The degree of electrode crack improvement in the first electrode facing the second end portion of the second electrode was simulated and evaluated for the secondary batteries according to Examples 1 and 2, and Comparative Example 1. Specifically, the maximum deformation ratio of the first electrode during expansion of the jelly-roll electrode assembly was measured in accordance with the volume change simulation of the step reducing portion provided in the step portion, and the results are shown in FIGS. 9 to 11. In this case, the second electrode had a free edge shape in which the second electrode current collector and the second electrode active material layer had the longitudinal end portions at the same position, and the first electrode was set under the same conditions as the Cu foil.

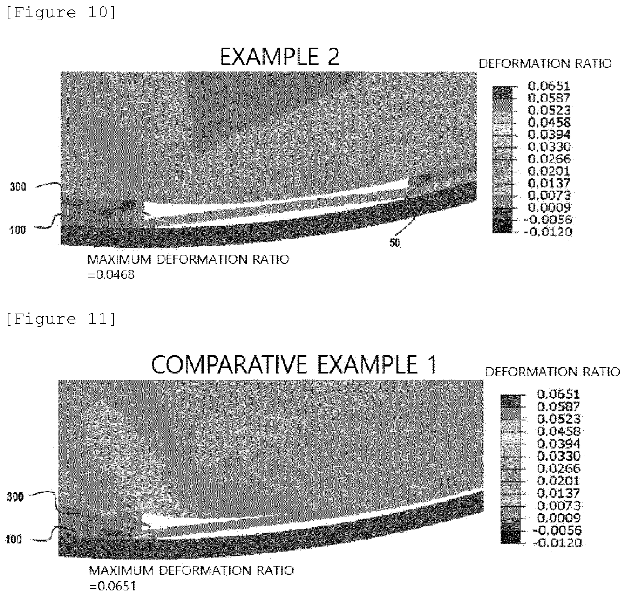

FIG. 9 is a simulation image showing a result of crack improvement evaluation for the secondary battery according to Example 1. FIG. 10 is a simulation image showing a result of crack improvement evaluation for the secondary battery according to Example 2. FIG. 11 is a simulation image showing a result of crack improvement evaluation for the secondary battery according to Comparative Example 1.

Referring to FIGS. 10 and 11, in the case of Example 2 including the step reducing portion having a thickness of 45% of the thickness of the second end portion of the second electrode, it was confirmed that the maximum deformation ratio occurred on a surface of the first electrode opposite to a surface facing the second end portion of the second electrode.

Specifically, the maximum deformation ratio of the first electrode of the secondary battery according to Comparative Example 1 was 0.0651, and the maximum deformation ratio of the first electrode of the secondary battery according to Example 2 was 0.0468. That is, it was confirmed that the maximum deformation ratio of the first electrode on the outermost side in Example 2 was reduced by 28.1%, as compared with Comparative Example 1.

From this, it can be seen that when the step reducing portion is provided in the step portion, the possibility of occurrence of cracks in the first electrode decreases, as the bending of the first electrode is reduced at the second end portion of the second electrode, and thus, the maximum deformation ratio decreases.

Referring to FIGS. 9 and 11, in the secondary battery according to Example 1, it was confirmed that the bending of the first electrode hardly occurred at the second end portion of the second electrode, whereas the bending of the first electrode occurred at the longitudinal end portion of the step reducing portion, and thus, the maximum deformation ratio of the first electrode was measured. It was confirmed that the maximum deformation ratio of the first electrode of the secondary battery according to Example 1 was 0.0259, which was reduced by 60.2%, as compared with the maximum deformation ratio of the first electrode of the secondary battery according to Comparative Example 1.

From this, it can be seen that when the step reducing portion is provided in the step portion, the bending of the first electrode at the second end portion of the second electrode is reduced, and the possibility of occurrence of cracks in the first electrode decreases as the maximum deformation ratio of the first electrode decreases, and that the possibility of occurrence of cracks in the first electrode is the lowest in the case where the step reducing portion having a thickness similar to that of the second end portion of the second electrode is provided, i.e., in the case of Example 1.

Thus, it can be seen that the jelly-roll type electrode assembly and the secondary battery including the same according to an exemplary embodiment of the present invention can prevent cracks and deformation of the electrode assembly by reducing the step due to the thickness of the positive electrode to thus improve stress concentration on the outermost negative electrode.

In addition, it can be seen that the jelly-roll type electrode assembly and the secondary battery including the same according to an exemplary embodiment of the present invention are economical because of the improved design, and such a design can prevent occurrence of local problems such as lithium precipitation in the corresponding region.

Although the preferred embodiments have been provided for better understanding of the present invention, it will be apparent to one skilled in the art that the embodiments are only provided to illustrate the present invention and various modifications and alterations are possible within the scope and technical spirit of the present invention. Such modifications and alterations naturally fall within the scope of claims appended below.

## Claims

1. A jelly-roll type electrode assembly (1000) comprising:
a first electrode (100; 100'), a first separator (20), a second electrode (300), and a second separator (40), each of the first electrode (100; 100'), the first separator (20), the second electrode (300), and the second separator (40) are sequentially stacked and wound,
wherein the first electrode (100; 100'), the first separator (20), the second electrode (300) and the second separator (40) each comprise a respective first end portion at which winding begins along a longitudinal direction, and a second end portion at which the winding ends, and
wherein a second end portion (22) of the first separator (20) or a second end portion (42) of the second separator (40) extends past a second end portion (320) of the second electrode (300), and includes a step reducing portion (50) bent or rolled toward the second end portion (320) of the second electrode (300).

2. The jelly-roll type electrode assembly (1000) of claim 1, wherein the step reducing portion (50) is formed by bending or rolling the second end portion (22) of the first separator (20) or the second end portion (42) of the second separator (40) toward the second end portion (320) of the second electrode (300) 3 or more times and 16 times or less.

3. The jelly-roll type electrode assembly (1000) of claim 1, wherein the jelly-roll type electrode assembly (1000) includes a step portion (60) defined by an empty space formed in a region where the first electrode (100; 100') covers the second end portion (320) of the second electrode (300), and
wherein the step reducing portion (50) is provided in the step portion (60).

4. The jelly-roll type electrode assembly (1000) of claim 3, wherein the step portion (60) comprises:
a first step (H1) defined by a thickness of the step reducing portion (50), and
a second step (H2) defined by a difference between a thickness of the second electrode (300) and the thickness of the step reducing portion (50).

5. The jelly-roll type electrode assembly (1000) of claim 4, wherein the first step (H1) has a thickness that is 20% or greater and 95% or less of a thickness of the second end portion (320) of the second electrode (300).

6. The jelly-roll type electrode assembly (1000) of claim 3, wherein a volume of the step reducing portion (50) is 5% or greater and 95% or less of a volume of the step portion (60).

7. The jelly-roll type electrode assembly (1000) of claim 1, wherein a thickness of the step reducing portion (50) is 20 µm or greater and 150 µm or less.

8. The jelly-roll type electrode assembly (1000) of claim 1, wherein a length of the step reducing portion (50) is 8 mm or longer and 30 mm or less.

9. The jelly-roll type electrode assembly (1000) of claim 1, wherein the second end portion of the first electrode (100; 100') extends past the second end portion (320) of the second electrode (300) and is additionally wound on an outer side of the electrode assembly.

10. The jelly-roll type electrode assembly (1000) of claim 1, wherein the first electrode (100; 100') is a negative electrode, and the second electrode (300) is a positive electrode.

11. A secondary battery comprising:
the jelly-roll type electrode assembly (1000) according to any one of claims 1 to 10; and
a battery case for accommodating the electrode assembly.

12. The secondary battery of claim 11, wherein the battery case is cylindrical.

## Patentansprüche

1. Jelly-Roll-Elektrodenanordnung (1000) aufweisend:
eine erste Elektrode (100; 100'), einen ersten Separator (20), eine zweite Elektrode (300) und einen zweiten Separator (40), wobei die erste Elektrode (100; 100'), der erste Separator (20), die zweite Elektrode (300) und der zweite Separator (40) nacheinander gestapelt und gewickelt sind,
wobei die erste Elektrode (100; 100'), der erste Separator (20), die zweite Elektrode (300) und der zweite Separator (40) jeweils einen jeweiligen ersten Endabschnitt, an dem das Wickeln entlang einer Längsrichtung beginnt, und einen zweiten Endabschnitt, an dem das Wickeln endet, aufweisen, und
wobei sich ein zweiter Endabschnitt (22) des ersten Separators (20) oder ein zweiter Endabschnitt (42) des zweiten Separators (40) über einen zweiten Endabschnitt (320) der zweiten Elektrode (300) hinaus erstreckt und einen Stufenverringerungsabschnitt (50) aufweist, der in Richtung des zweiten Endabschnitts (320) der zweiten Elektrode (300) gebogen oder gerollt ist.

2. Jelly-Roll-Elektrodenanordnung (1000) nach Anspruch 1, wobei der Stufenverringerungsabschnitt (50) durch Biegen oder Rollen des zweiten Endabschnitts (22) des ersten Separators (20) oder des zweiten Endabschnitts (42) des zweiten Separators (40) in Richtung des zweiten Endabschnitts (320) der zweiten Elektrode (300) 3-mal oder mehr und 16-mal oder weniger gebildet ist.

3. Jelly-Roll-Elektrodenanordnung (1000) nach Anspruch 1, wobei die Jelly-Roll-Elektrodenanordnung (1000) einen Stufenabschnitt (60) aufweist, der durch einen leeren Raum definiert ist, der in einem Bereich gebildet ist, in dem die erste Elektrode (100; 100') den zweiten Endabschnitt (320) der zweiten Elektrode (300) bedeckt, und
wobei der Stufenverringerungsabschnitt (50) in dem Stufenabschnitt (60) vorgesehen ist.

4. Jelly-Roll-Elektrodenanordnung (1000) nach Anspruch 3, wobei der Stufenabschnitt (60) aufweist:
eine erste Stufe (H1), die durch eine Dicke des Stufenverringerungsabschnitts (50) definiert ist, und
eine zweite Stufe (H2), die durch eine Differenz zwischen einer Dicke der zweiten Elektrode (300) und der Dicke des Stufenverringerungsabschnitts (50) definiert ist.

5. Jelly-Roll-Elektrodenanordnung (1000) nach Anspruch 4, wobei die erste Stufe (H1) eine Dicke aufweist, die 20% oder mehr und 95% oder weniger einer Dicke des zweiten Endabschnitts (320) der zweiten Elektrode (300) beträgt.

6. Jelly-Roll-Elektrodenanordnung (1000) nach Anspruch 3, wobei ein Volumen des Stufenverringerungsabschnitts (50) 5% oder mehr und 95% oder weniger eines Volumens des Stufenabschnitts (60) beträgt.

7. Jelly-Roll-Elektrodenanordnung (1000) nach Anspruch 1, wobei eine Dicke des Stufenverringerungsabschnitts (50) 20 µm oder mehr und 150 µm oder weniger beträgt.

8. Jelly-Roll-Elektrodenanordnung (1000) nach Anspruch 1, wobei eine Länge des Stufenverringerungsabschnitts (50) 8 mm oder länger und 30 mm oder weniger beträgt.

9. Jelly-Roll-Elektrodenanordnung (1000) nach Anspruch 1, wobei sich der zweite Endabschnitt der ersten Elektrode (100; 100') über den zweiten Endabschnitt (320) der zweiten Elektrode (300) hinaus erstreckt und zusätzlich außen auf der Elektrodenanordnung gewickelt ist.

10. Jelly-Roll-Elektrodenanordnung (1000) nach Anspruch 1, wobei die erste Elektrode (100; 100') eine negative Elektrode ist und die zweite Elektrode (300) eine positive Elektrode ist.

11. Sekundärbatterie aufweisend:
die Jelly-Roll-Elektrodenanordnung (1000) nach einem der Ansprüche 1 bis 10; und
ein Batteriegehäuse zum Aufnehmen der Elektrodenanordnung.

12. Sekundärbatterie nach Anspruch 11, wobei das Batteriegehäuse zylindrisch ist.

## Revendications

1. Ensemble d'électrodes du type Jelly Roll (1000) comprenant :
une première électrode (100 ; 100'), un premier séparateur (20), une deuxième électrode (300), et un deuxième séparateur (40), chacun de la première électrode (100 ; 100'), du premier séparateur (20), de la deuxième électrode (300), et du deuxième séparateur (40) étant empilé en séquence et enroulé,
la première électrode (100 ; 100'), le premier séparateur (20), la deuxième électrode (300), et le deuxième séparateur (40) comprenant chacun une partie de premier bout respective à laquelle commence l'enroulement dans le sens longitudinal, et une partie de deuxième bout à laquelle se termine l'enroulement, et
une partie de deuxième bout (22) du premier séparateur (20) ou une partie de deuxième bout (42) du deuxième séparateur (40) s'étendant au-delà d'une partie de deuxième bout (320) de la deuxième électrode (300), et comprenant une partie à pas réducteur (50) pliée ou enroulée vers la partie de deuxième bout (320) de la deuxième électrode (300).

2. Ensemble d'électrodes du type Jelly Roll (1000) selon la revendication 1,
la partie à pas réducteur (50) étant formée en pliant ou en enroulant la partie de deuxième bout (22) du premier séparateur (20) ou la partie de deuxième bout (42) du deuxième séparateur (40) vers la partie de deuxième bout (320) de la deuxième électrode (300) 3 fois ou davantage et 16 fois ou moins.

3. Ensemble d'électrodes du type Jelly Roll (1000) selon la revendication 1,
l'ensemble d'électrodes du type Jelly Roll (1000) comprenant une partie étagée (60) définie par un espace vide formé dans une zone où la première électrode (100 ; 100') couvre la partie de deuxième bout (320) de la deuxième électrode (300)
et
la partie à pas réducteur (50) étant agencée dans la partie du pas (60).

4. Ensemble d'électrodes du type Jelly Roll (1000) selon la revendication 3, la partie du pas (60) comprenant :
un premier pas (H1) défini par une épaisseur de la partie à pas réducteur (50), et
un deuxième pas (H2) défini par une différence entre une épaisseur de la deuxième électrode (300) et l'épaisseur de la partie à pas réducteur (50).

5. Ensemble d'électrodes du type Jelly Roll (1000) selon la revendication 4, l'épaisseur du premier pas (H1) mesurant 20% ou davantage et 95% ou moins que l'épaisseur de la partie de deuxième bout (320) de la deuxième électrode (300).

6. Ensemble d'électrodes du type Jelly Roll (1000) selon la revendication 3, un volume de la partie à pas réducteur (50) mesurant 5% ou davantage et 95% ou moins qu'un volume de la partie du pas (60).

7. Ensemble d'électrodes du type Jelly Roll (1000) selon la revendication 1, une épaisseur de la partie à pas réducteur (50) mesurant 20µm ou davantage et 150µm ou moins.

8. Ensemble d'électrodes du type Jelly Roll (1000) selon la revendication 1, une longueur de la partie à pas réducteur (50) mesurant 8 mm ou davantage et 30 mm ou moins.

9. Ensemble d'électrodes du type Jelly Roll (1000) selon la revendication 1, la partie du deuxième bout de la première électrode (100 ; 100') s'étendant au-delà de la partie de deuxième bout (320) de la deuxième électrode (300), et étant, en outre, enroulée sur un côté extérieur de l'ensemble d'électrode.

10. Ensemble d'électrodes du type Jelly Roll (1000) selon la revendication 1, la première électrode (100 ; 100') étant une électrode négative, et la deuxième électrode (300) étant une électrode positive.

11. Batterie secondaire comprenant :
l'ensemble d'électrodes du type Jelly Roll (1000) selon une quelconque des revendications 1 à 10 ; et
un boîtier de batterie pour recevoir l'ensemble d'électrodes.

12. Batterie secondaire selon la revendication 11, le boîtier de batterie étant cylindrique.
